(19) Europäisches Patentamt
European Patent Office
Office européen des brevets

(11) Veröffentlichungsnummer : **0 017 012**
**B1**

(12) # EUROPÄISCHE PATENTSCHRIFT

(45) Veröffentlichungstag der Patentschrift : **05.10.83**

(21) Anmeldenummer : **80101203.0**

(22) Anmeldetag : **10.03.80**

(51) Int. Cl.³ : **C 09 B 57/00**, C 09 B 47/073, D 06 P 1/14, C 09 B 59/00

(54) **Farbstoffe und Verfahren zur Erzeugung von Färbungen auf Basis von gegebenenfalls substituierten 2-Amino-5-imino-pyrroleninen.**

(30) Priorität : **22.03.79 DE 2911207**

(43) Veröffentlichungstag der Anmeldung : **15.10.80 Patentblatt 80/21**

(45) Bekanntmachung des Hinweises auf die Patenterteilung : **05.10.83 Patentblatt 83/40**

(84) Benannte Vertragsstaaten : **CH DE FR GB**

(56) Entgegenhaltungen :
**DE B 1 050 302**
**DE B 1 051 242**
**FR A 1 192 444**
**US A 2 765 308**

**CHEMICAL ABSTRACTS, Band 90, Nr. 10, 5. März 1979, Seite 66, Zusammenfassung 73303u COLUMBUS, Ohio (US)**

(73) Patentinhaber : **BAYER AG**
**Zentralbereich Patente, Marken und Lizenzen**
**D-5090 Leverkusen 1, Bayerwerk (DE)**

(72) Erfinder : **Eibl, Johannes, Dr.**
**Am Jungholzkamp 31**
**D-5093 Burscheid 1 (DE)**
Erfinder : **Hederich, Volker, Dr.**
**Hufelandstrasse 44**
**D-5000 Köln 80 (DE)**
Erfinder : **Herzog, Helmut, Dr.**
**Am Benthal 22**
**D-5090 Leverkusen 31 (DE)**
Erfinder : **Wunderlich, Klaus, Dr.**
**Carl-Rumpff-Strasse 21**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 017 012 B1

Jouve, 18, rue St-Denis, 75001 Paris, France

Farbstoffe und Verfahren zur Erzeugung von Färbungen auf Basis von gegebenenfalls substituierten 2-Amino-5-imino-pyrroleninen

Die Erfindung betrifft neue Farbstoffe, insbesondere Pigmente auf Basis von gegebenenfalls substituierten 2-Amino-5-imino-pyrroleninen sowie ein Verfahren zur Erzeugung von Färbungen mit diesen Farbstoffen auf Fasermaterialien.

Die neuen Farbstoffe bzw. Färbungen werden dadurch erhalten, daß man ein Gemisch aus

A) einer Verbindung, die in einer ihrer tautomeren Strukturen der Formel

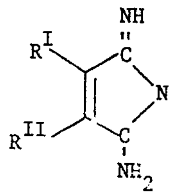

(I)

entspricht, in der

$R^I$, $R^{II}$ Alkyl, Phenyl, Wasserstoff oder zusammen Reste der Formeln

$S-CH_2-CH_2-S$,

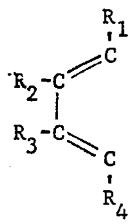

oder $CH_2—CH_2—CH_2—CH_2$

wobei

$R_1$, $R_2$, $R_3$, $R_4$ Phenyl, Alkoxy, Halogen, Phenoxy, Alkyl und Wasserstoff bezeichnen,

bedeuten oder eines Gemisches aus Verbindungen der Formel (I) ;

B) einer Verbindung der Formel

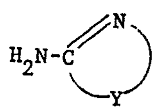

(II)

in der

Y für die restlichen Atome steht, die erforderlich sind, um einen gegebenenfalls substituierten heterocyclischen 5- oder 6-Ring, der neben dem N-Atom 1 bis 3, insbesondere 1 oder 2, weitere Heteroatome wie N, S oder O enthalten kann und an den weitere gegebenenfalls substituierte carbocyclische oder gegebenenfalls substituierte heterocyclische Ringe angegliedert sein können, auszubilden ;

C) einem Polyamin und/oder einer CH-aciden Verbindung und/oder einer aktivierten Halogenverbindung sowie

D) einem Metall oder einer Metallverbindung, die für die Herstellung von metallhaltigen Phthalocyaninen verwendet werden können, gegebenenfalls in Gegenwart eines Verdünnungsmittels unter Wärmebehandlung gegebenenfalls auf Fasermaterialien kondensiert.

Bevorzugt werden die neuen Farbstoffe dadurch hergestellt, daß man bezogen auf das Gesamtgewicht der Komponenten A, B und C 30-90 Gew.-% der Komponente A, 1-35 Gew.-% der Komponente B und 1-35 Gew.-% der Komponente C einsetzt. Besonders bevorzugt verwendet man 50-70 Gew.-% der Komponente A, 1-20 Gew.-% der Komponente B sowie 1-20 Gew.-% der Komponente C.

Zur Herstellung der neuen Farbstoffe eignen sich als Ausgangsprodukte insbesondere solche Verbindungen der Formel (I), bei denen

$R^I$, $R^{II}$ $C_1$-$C_4$-Alkyl, Phenyl, Wasserstoff, oder zusammen Reste der Formeln $S—CH_2—CH_2—S$, $CH_2—CH_2—CH_2—CH_2$ oder

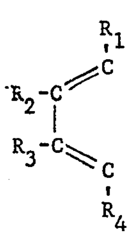

wobei

$R_1$, $R_2$, $R_3$, $R_4$ Wasserstoff oder Halogenatome, insbesondere Chlor oder Brom sowie einer oder zwei der Reste $R_1$, $R_2$, $R_3$, $R_4$ Alkyl-, insbesondere $C_1$-$C_4$-Alkyl, Alkoxy-, bevorzugt Methoxy- oder Phenoxygruppen und die übrigen Wasserstoffatome bezeichnen, sind.

Als Beispiele für erfindungsgemäß einsetzbare Verbindungen der Formel (I) seien genannt : 3,4-Dimethyl-2-amino-5-imino-pyrrolenin, 3-Ethyl-4-methyl-2-amino-5-imino-pyrrolenin, 1-Amino-3-imino-isoindolenin, 5-Phenyl-1-amino-3-imino-isoindolenin, 4,7-Dithia-4,5,6,7-tetrahydro-1-amino-3-imino-isoindolenin, 4,5,6,7-Tetrahydro-1-amino-3-imino-isoindolenin.

Besonders bevorzugt eingesetzt wird 1-Amino-3-imino-isoindolenin der tautomeren Strukturen

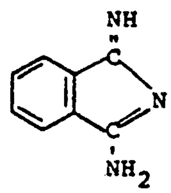 · und 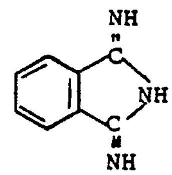

Zur Herstellung der neuen Farbstoffe wird die Komponente A besonders bevorzugt zu 60 bis 80 Gew.-%, bezogen auf das Gesamtgewicht der Komponenten A, B und C eingesetzt.

Zur Herstellung der neuen Farbstoffe wird die Komponente B besonders bevorzugt zu 10-20 Gew.-%, bezogen auf das Gesamtgewicht der Komponenten A, B und C mit A und C zur Umsetzung gebracht.

Den Verbindungen gemäß Formel (II), die als Komponente B zum Einsatz kommen, können z. B. folgende heterocyclische Ringsysteme zugrunde liegen : Pyridin, Pyrimidin, Thiazol, Isoxazol, Pyrazol, Imidazol, Triazol, Benzimidazol, Indazol, Chinolin, Picolin, Benzthiazol, Chinazolin, Chinoxalin, Pyridazin.

Als Einzelbeispiele für erfindungsgemäß einsetzbare Verbindungen der Formel (II) seien genannt : 2-Amino-4-phenyl-thiazol, 1-Phenyl-3,5-diamino-1,2,4-triazol, 2-Amino-5-methoxybenzthiazol, 2-Aminobenzthiazol, 4,5-Diaminopyrimidin, 5,6-Diamino-2,4-dihydroxypyrimidin, 4,5-Diamino-6-hydroxy-2-mercapto-pyrimidin, 4,5-Diamino-6-hydroxypyrimidin, 2,4-Diamino-6-methyl-1,3,5-triazin, 2,3-, 2,6-Diaminopyridin, 5,6-Diamino-2,4-dihydrocypyrimidin, Melamin.

Besonders bevorzugte Verbindungen gemäß Formel (II) entsprechen in einer ihrer tautomeren Formen der Formel

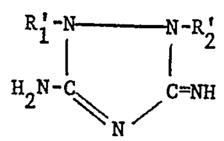 (III)

in der

$R'_1$, $R'_2$ für Wasserstoff, Acyl-, Alkyl- oder Arylreste stehen.

In Formel (III) stehen $R'_1$ und $R'_2$ bevorzugt für Wasserstoff, $C_1$-$C_4$-Alkyl, $C_1$-$C_4$-Alkylcarbonyl oder für gegebenenfalls durch $C_1$-$C_4$-Alkyl, Halogen, vorzugsweise Chlor, Brom und Fluor, Nitro, Carboxy, Cyan, Sulfamoyl, Carbamoyl, $C_1$-$C_4$-Alkylsulfonyl, Phenylsulfonyl, Amino, $C_1$-$C_4$-Alkylamino, Di-($C_1$-$C_4$-alkyl)-amino substituiertes Phenyl.

Als Beispiele für erfindungsgemäß einsetzbare Verbindungen, die in einer ihrer tautomeren Strukturen der Formel (III) entsprechen, seien genannt :

2,5-Diamino-3-phenyl-1,3,4-triazol, 2,5-Diimino-1,3,4-triazol, 2-Amino-5-imino-3,4-dimethyl-1,3,4-triazol, 2,5-Diamino-3-(2-chlorphenyl)-1,3,4-triazol, 2,5-Diamino-3-(2-nitrophenyl)-1,3,4-triazol, 2,5-Diamino-3-(4-carboxyphenyl)-1,3,4-triazol, 2,5-Diamino-3-(4-sulfonamidophenyl)-1,3,4-triazol, 2,5-Diamino-3-benzolsulfon-1,3,4-triazol.

Besonders bevorzugte Verwendung findet 2,5-Diamino-3-phenyl-1,3,4-triazol.

Bevorzugte Polyamine, die im Rahmen der Komponente C eingesetzt werden können, entsprechen der Formel

$$[Ar]—(NH_2)_n \qquad (IV)$$

in der

Ar für einen gegebenenfalls substituierten Phenyl-, Biphenylyl-, Naphthyl-, Binaphthylyl- oder Anthrachinonyl-Rest steht und

n 2, 3 oder 4 bezeichnet.

Die für Ar genannten Reste können vorzugsweise folgende Substituenten tragen :

$C_1$-$C_6$-Alkyl, insbesondere Methyl und Ethyl, $C_1$-$C_6$-Alkoxy, insbesondere Methoxy und Ethoxy, Halogen, insbesondere Chlor, Brom und Fluor, Hydroxy, Sulfo, Carboxy, Nitro.

Als Beispiele für Polyamine der Formel (IV) seien genannt:

o-Phenylendiamin, m-Phenylendiamin, p-Phenylendiamin, 2,4-, 2,3-, 2,5-, 3,4- und 3,5-Diaminobenzoesäure, 2,4,6-Triamino-benzoesäure, 2,3-, 3,4-, 2,4- und 2,5-Diaminomethylbenzol, 2,4- und 2,5-Diaminoanisol, 2,5- und 3,5-Diaminonitrobenzol, 2,4-Diaminophenol, 4,5-Diamino-o-xylol, 3,6-Diaminodurol, 2,4,6-Triaminotoluol, 1,3,5-Triamino-2,4,6-trimethylbenzol, 1,2,4,5-Tetraaminobenzol, 1,2,3-, 1,2,4- und 1,3,5-Triaminobenzol, o-Tolidin, o-Dianisidin, 2,2'-Diaminodiphenyl, 4,4'-Diaminodiphenyldisulfonsäure-(3,3'), 1,5-, 1,8- und 2,3-Diaminonaphthalin, 1,1'-Diamino-2,2'-dinaphthyl, 2,2'-Diamino-1,1'-dinaphthyl, 4,4'-Diamino-1,1'-dinaphthyl, 1,2-, 1,4-, 1,5-, 1,6-, 1,7-, 1,8-, 2,3-, 2,6- und 2,7-Diaminoanthrachinon, 1,4-Diamino-2,3-dichloranthrachinon, 1,4-Diamino-5,8-dichloranthrachinon, 1,5-Diamino-4,8-dihydroxyanthrachinon, 1,4-Diamino-2-methylanthrachinon, 1,4,5,8-Tetraaminomethylanthrachinon, 1,4,5,8-Tetraaminoanthrachinon.

Eine bevorzugte Klasse von CH-aciden Verbindungen, die sich als Komponente C einsetzen läßt, kann durch die Formel

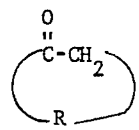

(V)

wiedergegeben werden.

In der Formel (V) steht R für die Atome, die erforderlich sind, um einen gegebenenfalls substituierten carbocyclischen oder heterocyclischen 5- oder 6-Ring auszubilden.

Beispiele der durch die Formel dargestellten Verbindungen, in denen R gegebenenfalls Atome oder Atomgruppen enthalten kann, die eine zusätzliche Aktivierung der $CH_2$-Gruppe bewirken und in denen R gegebenenfalls weiter substituiert sein kann, sind z. B. die folgenden Verbindungen:

1-Phenyl-3,5-dioxo-pyrazolidin, 1,2-Diphenyl-3,5-dioxopyrazolidin, Dihydroresorcin, Resorcin, 1,3,5-Trihydroxybenzol, 1,3-Dihydroxy-naphthalin, Perinaphthindan-dion, Barbitursäure, N,N'-Diphenyl-barbitursäure, N,N'-Diphenyl-thiobarbitursäure, 2,4-Dihydroxy-chinolin, 1-Methyl-2,4-dihydroxy-chinolin, 1-n-Butyl-2,4-dihydroxy-chinolin, 1,8-Trimethylen-4-hydroxy-carbostyril, 2,4-Dioxo-6-imino-hexahydropyrimidin, 2,4-Dioxo-5-cyano-6-imino-hexahydropyrimidin, 1-Phenyl-3-oxo-5-imino-pyrazolidin, 4-Oxo-2,6-di-imino-hexahydro-pyrimidin, 4-Oxo-5-cyano-2,6-diimino-hexahydro-pyrimidin, Acenaphthindan-dion-diimid, 2-Imino-4-oxo-thiazolidin, 2-Imino-4-oxo-imidazolidin, 4-Phenyl-2-imino-4-oxo-imidazolidin, 2-Imino-4-oxo-oxazolidin, 3-Methyl-pyrazolon-5, 1-Phenyl-3-methyl-pyrazolon-5, 1-Naphthol, 1-Naphthol-4-methyläther, 1',2'-Naphtho-(1',2': 4,5)-3-hydroxy-thiophen, 1-Oxyanthracen, 1-Naphthol-5-sulfonsäure und 1,5-Dihydroxy-naphthalin.

Eine weitere bevorzugte Klasse von CH-aziden Verbindungen, die erfindungsgemäß eingesetzt werden können, sind offenkettige β-Dicarbonyl-Verbindungen, der Struktur

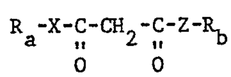

(VI)

wobei

$R_a$ und $R_b$ für gegebenenfalls substituiertes Alkyl oder Aryl stehen und

X, Z ein Brückenglied —O— oder —NH— oder eine direkte Bindung bezeichnen.

Bevorzugt stehen $R_a$ und $R_b$ für $C_1$-$C_6$-Alkyl und Phenyl.

Als Beispiele für Verbindungen der Formel (VI) seien genannt:

Acetessigsäuremethyl-, ethyl- und -phenylester, Acetondicarbonsäuremethyl- und ethylester.

Bei den erfindungsgemäß einsetzbaren aktivierten Halogenverbindungen handelt es sich um Verbindungen deren Halogenatome wie insbesondere Chlor, Brom und Fluor durch in der Nähe liegende —C = C—, > C = 0, und/oder > C = N— Bindungen in ihrer Austauschfähigkeit aktiviert werden. Als Beispiel seien Mucochlorsäure, Allylbromid sowie 1,4-Dichlorbuten-(2) genannt.

Als Metallverbindungen, die für die Herstellung von metallhaltigen Phthalocyaninen verwendet werden können, seien Kupfer-, Nickel-, Kobalt-, Magnesium- oder Natriumverbindungen beispielhaft genannt. Bevorzugt werden Chloride, Sulfate oder Komplexverbindungen dieser Metalle in die farbstoffbildende Reaktion eingesetzt. Ganz besonders bevorzugt werden Cu-, Ni- oder Co-Verbindungen verwandt.

Bevorzugt werden die neuen Farbstoffe dadurch hergestellt, daß man, bezogen auf das Gesamtgewicht der Komponenten A, B und C

A) 30 bis 90 Gew.-% einer Verbindung, die in einer ihrer tautomeren Strukturen der Formel

(Siehe der Formel Seite 5 f.)

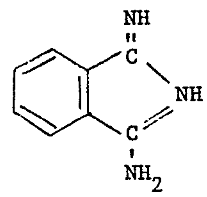

entspricht, mit B) 5 bis 35 Gew.-% Phenylguanazol und C) 3-35 Gew.-% einer CH-aciden Verbindung, einer aktivierten Halogen-verbindung oder eines Polyamins umsetzt.

Abhängig von der Art und den Mengenverhältnissen der Ausgangskomponenten lassen sich Farbstoffe bzw. Färbungen verschiedener Farbnuancen herstellen.

Ein neutraler Schwarzfarbstoff ist beispielsweise dadurch erhältlich, daß man 60 bis 80 Gew.-Teile 1-Amino-3-imino-isoindolenin mit 10 bis 15 Gew.-Teilen Phenyl-guanazol und 10 bis 15 Gew. Teilen 2,4-Dihydroxy-chinolin in Gegenwart einer Nickelverbindung umsetzt. Ebenfalls schwarze Pigmente erhält man, wenn man im obigen Ansatz 2,4-Dihydroxy-chinolin durch N'-Acetyl-N-acetoacetyl-p-phenylendiamin, 3-Methyl-5-pyrazolon, Pseudothiohydantoin, Glykocyamidin, N-Butyl-2,4-dihydroxychinolin, 1,8-Trimethylencarbostyril, das Kondensationsprodukt aus Tetrachlorphthalsäurehydrazid mit Dicyandiamid, Peri-Naphthindandion oder 1-Naphthol-4-methylether ersetzt.

Braune Farbstoffe sind beispielsweise dadurch erhältlich, daß man 30 bis 70 Gewichtsteile 1-Amino-3-imino-isoindolenin mit 5 bis 30 Gewichtsteilen Phenylguanazol und 5 bis 30 Gewichtsteilen Peri-Naphthindandion in Gegenwart einer Nickel- oder Kupferverbindung umsetzt. Folgende Varianten dieses Ansatzes führen ebenfalls zu Braunfarbstoffen bzw. -färbungen :

Ersatz von 1-Amino-3-imino-isoindolenin durch phenyl-oder methoxy-substituierte 1-Amino-3-imino-isoindolenine oder eine Verbindung, die in einer ihrer tautomeren Strukturen der Formel

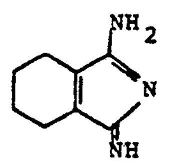 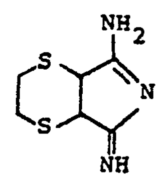 oder 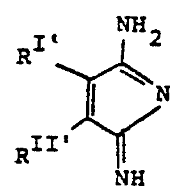

in der $R^{I'}$ und $R^{II'}$ für Alkyl, Phenyl oder Wasserstoff stehen, entspricht.

Das erfindungsgemäße Verfahren zur Erzeugung von Färbungen auf Fasermaterialien ist dadurch gekennzeichnet, daß man die im Vorhergehenden beschriebenen neuen Farbstoffe auf der Faser gegebenenfalls in Gegenwart von Lösungsmitteln und Reduktionsmitteln, nuter Wärmebehandlung herstellt.

Als Lösungsmittel eignen sich für das erfindungsgemäße Verfahren vorzugsweise solche, die schwach reduzierende Eigenschaften besitzen, wie z. B. mehrwertige Alkohole, genannt seien Glykol und Glycerin, oder reduzierende Säuren bzw. ihre funktionellen Derivate, wie z. B. Ameisensäure und Formamid, oder auch Aminohydroxylverbindungen, wie die Aminoalkohole. Weitere geeignete Lösungsmittel bzw. Lösungsmittelgemische werden z. B. in der DE-PS 888 837 beschrieben. Geeignet sind aber auch Chlorbenzol, Nitrobenzol und Toluol.

Die Erzeugung der Färbungen auf der Faser aus den erfindungsgemäß verwendeten Verbindungen kann in so schonender Weise erfolgen, daß keine Schädigung der Faser eintritt. Mitunter ist es vorteilhaft, Salze (besonders Ammoniumsalze) von anorganischen oder organischen Säuren oder auch die Säuren selbst dem Reaktionsgemisch zuzuführen. Nachdem man die gegebenenfalls zur Komplexbildung fähigen Metalle bzw. Metallverbindungen zugesetzt hat, bringt man die Ausgangsmaterialien auf die Faser nach an sich bekannten Verfahren auf, z. B. durch Klotzen oder Drucken, und entwickelt dann die Farbstoffe durch neutrales oder saures Dämpfen oder allein durch eine Wärmebehandlung, wobei man z. B. in der in der DE-PS 888 837 angegebenen Weise verfahren kann. Falls es gewünscht wird, kann man auf den zu färbenden Materialien auch in üblicher Weise Reservierungen vornehmen, z. B. durch vorheriges Aufdrucken aliphatischer. Diamine.

Nach dem neuen Verfahren werden Farbstoffe bzw. Färbungen oder Drucke in den verschiedensten Farbtönen, wie z. B. Grün, Grau, Oliv, Braun, Ziegelrot, erhalten, die vorzügliche Echtheitseigenschaften besitzen.

Das neue Verfahren eignet sich besonders zum Färben und Bedrucken von Cellulose oder cellulosehaltigem Material.

Die Kondensation der Komponenten A, B und C zur Herstellung von Farbstoffen insbesondere Pigmenten in Substanz erfolgt zweckmäßig durch Umsetzen in Wasser oder in einem vorzugsweise hydrophilen, organischen Lösungsmittel, beispielsweise aliphatischen Alkoholen mit 1 bis 4 C-Atomen,

wie Methanol, Äthanol, Isopropanol, Butanol, ferner Glykolen oder Glykoläther, offenkettigen oder cyclischen Amiden, wie Dimethylformamid, Dimethylacetamid oder N-Methylpyrrolidon, wobei auch Mischungen der genannten Lösungsmittel verwendet werden können. Die Umsetzung erfolgt zweckmäßig bei Temperaturen zwischen 20 und 150 °C.

Die erhaltenen Pigmente fallen zumeist schon in der Hitze aus und können durch Abfiltrieren und gegebenenfalls durch Waschen mit organischen Lösungsmitteln in reiner Form isoliert werden.

Eine andere Darstellungsmöglichkeit für die neuen Pigmente besteht darin, die Ausgangskomponenten in der Harnstoffschmelze bei etwa 130 bis etwa 150° umzusetzen und den Ansatz in an sich bekannter Weise aufzuarbeiten.

Die erhaltenen Pigmente besitzen im allgemeinen eine gute Textur und können meistens als Rohprodukte verwendet werden. Falls nötig oder erwünscht, kann man die Rohprodukte durch Mahlen oder Kneten in eine feindisperse Form überführen. Dabei werden zweckmäßig Mahlhilfsmittel, wie anorganische und/oder organische Salze in Gegenwart oder Abwesenheit organischer Lösungsmittel verwendet. Auch durch Behandeln der Rohpigmente mit organischen Lösungsmitteln kann oft eine Verbesserung der Eigenschaften erreicht werden. Nach dem Mahlen werden Hilfsmittel wie üblich entfernt, lösliche anorganische Salze, z. B. mit Wasser und wasserunlösliche Hilfsmittel beispielsweise durch Wasserdampfdestillation.

Die erfindungsgemäß erhaltenen Pigmente eignen sich zum Färben von hochmolekularem organischem Material natürlicher oder künstlicher Herkunft. Es kann sich z. B. um Naturharze, trocknende Öle oder Kautschuk handeln. Es kann sich aber auch um abgewandelte Naturstoffe handeln, beispielsweise um Chlorkautschuk, um ölmodifizierte Alkydharze oder um Cellulosederivate, wie Viskose, Acetylcellulose und Nitrocellulose und besonders um vollsynthetische organische Polyplaste, d. h. um Kunststoffe, die durch Polymerisation, Polykondensation und Polyaddition hergestellt sind. Aus der Klasse dieser Kunststoffe seien besonders folgende genannt : Polyäthylen, Polypropylen, Polyisobutylen, Polystyrol, Polyvinylchlorid, Polyvinylacetat, Polyacrylnitril, Polyacrylsäure- und Polymethacrylsäureester ; Polyester, insbesondere hochmolekulare Ester aromatischer Polycarbonsäuren mit polyfunktionellen Alkoholen ; Polyamid ; die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste ; die als Lackharze verwendeten Polyester, und zwar sowohl gesättigte wie z. B. Alkyldharze, als auch ungesättigte, wie beispielsweise Maleinatharze, und ferner die unter dem Namen « Epoxidharze » bekannten Polyadditions- bzw. Polykondensationsprodukte von Epichlorhydrin mit Diolen oder Polyphenolen ; ferner die sogenannten Thermoplasten, d. h. die nicht härtbaren Polyplaste. Es sei betont, daß nicht nur die einheitlichen Verbindungen, sondern auch Gemisch von Polyplasten, sowie Mischkondensate und Mischpolymerisate, wie z. B. solche auf Basis von Butadien, erfindungsgemäß pigmentiert werden können.

Die erfindungsgemäßen Pigmente sind für das Färben von Vinyl-, Polyolefin- und Styrolpolymerisaten, wie von Polyplasten, wie von als Lackrohstoffe bekannten, sogenannten Filmbildnern oder Bindemitteln, besonders von Leinölfirnis, Nitrocellulose, Alkydharzen, Melaminharzen und Harnstoff-Formaldehydharzen geeignet. Die Pigmentierung der hochmolekularen organischen Substanzen mit den erfindungsgemäßen Pigmenten erfolgt beispielsweise derart, daß man ein solches Pigment, gegebenenfalls in Form von Masterbatches, diesen Substraten unter Verwendung von Walzwerken, Misch- oder Mahlapparaten zumischt. Das pigmentierte Material wird hierauf nach an sich bekannren Verfahren wie Kalandrieren, Pressen, Strangpressen, Streichen, Gießen, oder durch Spritzguß in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z. B. Ester der Phosphorsäure, Phthalsäure oder Sebacinsäure dienen. Die Weichmacher können vor oder nach der Einverleibung des Pigmentfarbstoffes in die Polyplasten eingearbeitet werden. Es ist ferner möglich, zwecks Erzielung verschiedener Farbtöne den hochmolekularen organischen Stoffen neben den neuen Pigmenten noch Füllstoffe bzw. andere farbgebende Bestandteile wie Weiß-, Bunt- oder Schwarzpigmente in beliebigen Mengen zuzufügen.

Zum Pigmentieren von Lacken und Druckfarben werden die hochmolekularen organischen Materialien und die neuen Pigmente gegebenenfalls zusammen mit Zusatzstoffen wie Füllmitteln, anderen Pigmente, Siccativen oder Weichmachern, in einem gemeinsamen organischen Lösungsmittel oder Lösungsmittelgemisch fein dispergiert bzw. gelöst. Man kann dabei so verfahren, daß man die einzelnen Komponenten für sich oder auch mehrere gemeinsam dispergiert bzw. löst, und erst hierauf alle Komponenten zusammenbringt.

Die pigmentierten hochmolekularen organischen Substanzen weisen sehr echte, schwarze, braune oder grüne Farbtöne auf und zeichnen sich durch gute Licht-, Wetter-, Migrations-, Überlackier- und Lösungsmittelfestigkeit sowie Hitzebeständigkeit aus. Die Pigmente weisen auch eine gute Farbstärke auf.

Beispiel 1

1. Zur Bereitung eines Druckansatzes werden 70 g 1-Amino-3-imino-isoindolenin, 12,5 g 2,4-Dihydroxy-chinolin und 12,5 g Phenylguanazol (2,5-Diamino-3-phenyl-1,3,4-triazol) innig vermischt und mit einer

10 %igen ammoniakalischen Lösung von 20 g des Nickelsalzes von Hydroxyethylsarkosin und 100 g eines Gemisches aus 40 g Methylpolyglykol, 30 g Triethanolamin, 10 g eines nicht-ionogenen Emulgators, 10 g Phenoxyethanol und 10 g Tri-i-propylamin in 195 g Wasser versetzt. Man gibt 5 g 25 %ige Ammoniaklösung hinzu und rührt das Gemisch in 550 g einer Stärke-ether-Alginat-Verdickung ein und versetzt zum Schluß mit 35 g Diethylaminoethanollactat.

Mit diesem Ansatz wird in bekannter Weise ein Baumwollgewebe bedruckt, getrocknet und der Farbstoff durch Dämpfen bei 102 °C entwickelt. Der Druck wird zunächst mit 5-10 g konz. Salzsäure bei 60 °C ca. 1 Min. nachbehandelt, anschließend gespült und kochend geseift. Man erhält einen schwarzen Druck von sehr guten Echtheiten.

1.1 Die Mengen der Ausgangskomponenten im obigen Druckansatz lassen sich im Bereich von

60-80 g 1-Amino-3-imino-isoindolenin
10-15 g Phenylguanazol
10-15 g 2,4-Dihydroxychinolin

frei wählen. Die zugesetzte Wassermenge ist dabei so zu bemessen, daß für den Druckansatz ein Gewicht von 1 000 g resultiert.

1.2 Ersetzt man in den unter 1. und 1.1 angegebenen Druckansätzen 2,4-Dihydroxychinolin durch die im folgenden angegebenen Verbindungen und druckt diese Ansätze auf Baumwolle, so erhält man ebenfalls schwarze Drucke von sehr guten Echtheiten :

1.2.1 N'-Acetyl-N-acetoacetyl-p-phenylendiamin
1.2.2 3-Methyl-pyrazolon-(5)
1.2.3 Pseudothiohydantoin
1.2.4 Glykocyamidin
1.2.5 1-n-Butyl-2,4-dihydroxychinolin
1.2.6 1,8-Trimethylencarbostyril
1.2.7 Perinaphthindendion
1.2.8 1-Naphthol-4-methylether

1.3 Die unter 1. beschriebene Fixierung des Drucks läßt sich wie folgt abändern
a) Heißluft, 120-145 °C, 3-4 Min.
b) überhitzter Wasserdampf, 5 Min. 160 °C
c) Trockenzylinder (Berührungskonstakt), 3-4 Min., 120-145 °C.

## Beispiel 2

### Druckansatz

40 g 1-Amino-3-imino-isoindolenin
12 g Nickelsalz von Hydroxyethylsarkosin
12 g Acetessigsäuremethylester
100 g Thiodiglykol
8 g Natronlauge 38° Be
238 g Wasser
550 g Stärkeether-Alginat-Verdickung
35 g Diethylaminoethanol-Lactat
5 g Phenylguanazol*
―――――
1 000 g

Bedruckt man mit diesem Ansatz nach der in Beispiel 1 angegebenen Vorschrift Baumwollgewebe, so erhält man olivgrüne bis schwarze Drucke.

2.1 Ähnliche Ergebnisse erhält man, wenn man im obigen Druckansatz Acetessigsäuremethylester durch die gleiche Menge Acetessigsäureethylester, Mucochlorsäure, Acetondicarbonsäuredimethylester.

2.2 Ebenfalls gute Drucke erhält man, wenn man Druckansätze gemäß 2 bzw. 2.1 verwendet, bei denen das Phenylguanazol durch 2-Aminobenzthiazol ersetzt wird.

* Die Menge an Phenylguanazol ist in diesem Druckansatz im Bereich von 5-25 g frei wählbar ; entsprechend ist die zugesetzte Wassermenge zu ändern, so daß die Gesamtmasse des Ansatzes 1 000 g ergibt.

Beispiel 3

Druckansätze

70-30 g 1-Amino-3-imino-isoindolenin
30- 5 g Perinaphthindendion
30- 5 g Phenylguanazol
20-10 g Nickelkomplexsalz von Ethanolsarkosin
100 g® Levasol (Gemisch aus 40 Gew.-Teilen Methyl-polyglykol, 30 Gew.-Teilen Triethanolamin, 10 Gew.-Teilen eines nicht-ionogenen Emulgators, 10 Gew.-Teilen Phenoxyethanol und 10 Gew.-Teilen Tri-iso-propanolamin)
X g Wasser *
5 g konz. Ammoniaklösung
500 g Stärkeether-Alginat-Verdickung
35 g Lactat von Diethylaminoethanol

Die obige Druckpaste wird auf cellulosische Flächengebilde oder Mischgewebe mit 50 % Celluloseanteil aufgedruckt, getrocknet und durch Neutraldampf bei 102 °C während 8 Min. entwickelt. Zur Nachbehandlung wird mit 5-10 g/l HCl 30 Sek. – 1 Min. bei 80 °C abgesäuert, anschließend kochend gewaschen, gespült und getrocknet.

Man erhält dunkelbraune bis gelbbraune Drucke von ausgezeichneten Echtheiten.

3.1 Ähnliche Ergebnisse erhält man, wenn man in den Druckansätzen nach Beispiel 3 1-Amino-3-imino-isoindolenin durch Tetrahydro-1-amino-3-imino-isoindolenin oder 4,7-Dithia-4,5,6,7-tetrahydro-1-amino-3-imino-isoindolenin ersetzt.

3.2 Ebenfalls dunkelbraune bis gelbbraune Drucke erhält man, wenn man im Beispiel 3, Phenylguanazol durch

4,6-Diamino-2-phenyl-1,3,5-triazin oder
2,6-Diaminopyridin

ersetzt.

Beispiel 4

Druckansätze

70-30 g 1-Amino-3-imino-isoindolenin
10-20 g 2-Aminobenzthiazol
5-30 g 3-Methyl-5-pyrazolon
20-10 g Nickelkomplexsalz von Ethanolsarkosin
100 g ® Levasol (Gemisch aus 40 Gew.-Teilen Methylpolyglykol, 30 Gew.-Teilen Triethanolamin, 10 Gew.-Teilen eines nicht-ionogenen Emulgators, 10 Gew.-Teilen Phenoxyethanol und 10 Gew.-Teilen Tri-iso-propanolamin)
X g Wasser *
5 g konz. Ammoniaklösung
500 g Stärkeether-Alginat-Verdickung
35 g Lactat von Diethylaminoethanol

Die obige Druckpaste wird auf cellulosische Flächengebilde oder Mischgewebe mit 50 % Celluloseanteil aufgedruckt, getrocknet und durch Neutraldampf bei 102 °C während 8 Min entwickelt. Zur Nachbehandlung wird mit 5-10 g/l HCl 30 Sek. – 1 Min. bei 80 °C abgesäuert, anschließend kochend gewaschen, gespült und getrocknet.

Man erhält dunkelgrüne bis olivgrüne Farbtöne von sehr guten Echtheiten.

Beispiel 5

60 g 1-Amino-3-imino-isoindolenin, 20 g Phenylguanazol, 10 g m-Phenylendiamin, 500 g Harnstoff sowie 20 g des Nickelkomplexes von N-Ethylsarcosin werden innig gemischt und mit 5 g Diethylaminoethanol-lactat versetzt und das Gemenge allmählich auf ca. 130 °C erhitzt. Die Kondensation ist bei dieser Temperatur in 3 bis 5 Minuten abgeschlossen, da sich das Pigment schon bei Beginn des

* Die Wassermenge ist so zu bemessen, daß für den Druckansatz eine Gesamtmenge von 1 000 g resultiert.

Erwärmens zu bilden beginnt. Zweckmäßig wird die Masse gerührt um eine gleichmäßige Temperaturverteilung und damit gleiche Reaktionsbedingungen zu erzielen. Nach Aufarbeitung wie in Beispiel 1 beschrieben, erhält man ein rotbraunes farbstarkes Pigment.

Beispiel 6

30 g 1-Amino-3-imino-isoindolenin, 12 g des Nickelkomplexes von N-Ethylsarcosin, 10 g Phenylguanazol, 20 g Perinaphthinden-dion, 300 g Harnstoff sowie 10 g Diethylamino-ethanol-lactat werden nach inniger Vermischung geschmolzen, die löslichen Teile in verdünnter Salzsäure aufgenommen und das Pigment auf dem Filter gewaschen und mit Ammoniak-haltigem Wasser neutralisiert. Man erhält ein neutrales Braun-Pigment.

**Ansprüche**

1. Farbstoffe, dadurch erhalten daß man ein Gemisch aus

A) einer Verbindung, die in einer ihrer tautomeren Strukturen der Formel

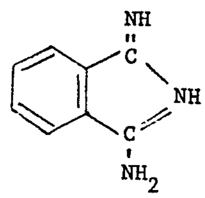

(I)

entspricht, in der

$R^I$, $R^{II}$ Alkyl, Phenyl, Wasserstoff oder zusammen Reste der Formel

$S-CH_2-CH_2-S$,

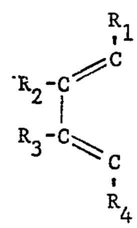

oder $CH_2—CH_2—CH_2—CH_2$

wobei

$R_1$, $R_2$, $R_3$, $R_4$ Phenyl, Alkoxy, Halogen, Phenoxy Alkyl und Wasserstoff bezeichnen,

bedeuten ;

B) einer Verbindung der Formel

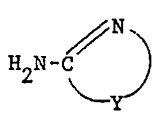

(II)

in der

Y für die restlichen Atome steht, die erforderlich sind, um einen gegebenenfalls substituierten heterocyclischen 5- oder 6-Ring, der neben dem N-Atom 1 bis 3 weitere Heteroatome wie N, S oder O enthalten kann und an den weitere gegebenenfalls substituierte carbocyclische oder gegebenenfalls substituierte heterocyclische Ringe angegliedert sein können,

auszubilden ;

C) einem Polyamin und/oder einer CH-aciden Verbindung und/oder einer aktivierten Halogenverbindung sowie

D) einem Metall oder einer Metallverbindung, die für die Herstellung von metallhaltigen Phthalocyaninen verwendet werden können,

gegebenenfalls in Gegenwart eines Verdünnungsmittels unter Wärmebehandlung kondensiert.

2. Farbstoffe gemäß Anspruch 1, dadurch erhalten, daß man bezogen auf das Gesamtgewicht der Komponenten A, B und C 30-90 Gew.-% insbesondere 50-70 Gew.-% der Komponente A, 1-35Gew.-% insbesondere 1-20 Gew.-% der Komponente B und 1-35 Gew.-% insbesondere 1-20 Gew.-% der Komponente C einsetzt.

3. Farbstoffe gemäß Anspruch 1, dadurch erhalten, daß man als Komponente A eine Verbindung der Formel (I) einsetzt, bei der

$R^I$, $R^{II}$ $C_1$-$C_4$-Alkyl, Phenyl, Wasserstoff, oder zusammen Reste der Formeln $S—CH_2—CH_2—S$, $CH_2—CH_2—CH_2—CH_2$ oder

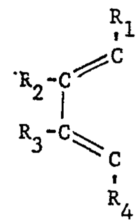

wobei

$R_1$, $R_2$, $R_3$, $R_4$ Wasserstoff oder Halogenatome, insbesondere Chlor oder Brom sowie einer oder zwei der Reste $R_1$, $R_2$, $R_3$, $R_4$ Alkyl-, insbesondere $C_1$-$C_4$-Alkyl, Alkoxy-, bevorzugt Methoxy- oder Phenoxygruppen und die übrigen Wasserstoffatome bezeichnen, sind.

4. Farbstoffe gemäß Anspruch 3, dadurch erhalten, daß man als Komponente A 1-Amino-3-imino-isoindolenin einsetzt.

5. Farbstoffe gemäß den Ansprüchen 1 bis 4, dadurch erhalten daß man als Komponente B eine Verbindung der Formel

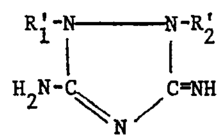

einsetzt,

in der $R_1'$, $R_2'$ für Wasserstoff, Acyl-, Alkyl- oder Arylreste stehen.

6. Farbstoffe gemäß Anspruch 5, dadurch erhalten, daß man als Komponente B 2,5-Diamino-3-phenyl-1,3,4-triazol einsetzt.

7. Farbstoffe gemäß den Ansprüchen 1 bis 6, dadurch erhalten, daß man als Komponente C ein Polyamin der Formel

$$[Ar]—(NH_2)_n$$

einsetzt,

in der

Ar für einen gegebenenfalls substituierten Phenyl-, Biphenylyl-, Naphthyl-, Binaphtylyl- oder Anthrachinonyl-Rest steht und

n 2, 3, oder 4 bezeichnet.

8. Farbstoffe gemäß den Ansprüchen 1 bis 7, dadurch erhalten, daß man als Komponente C eine CH-acide Verbindung der Formel

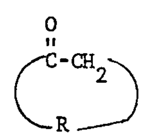

in der R für die Atome steht, die erforderlich sind, um einen gegebenenfalls substituierten carbocylischen oder heterocyclischen 5- oder 6-Ring auszubilden und/oder eine offenkettige 3-Dicarbonylverbindung der Formel

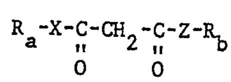

in der

$R_a$ und $R_b$ für gegebenenfalls substituiertes Alkyl oder Aryl stehen und

X, Z ein Brückenglied —O— oder —NH— oder eine direkte Bindung bezeichnen, einsetzt.

9. Farbstoffe gemäß Anspruch 1, dadurch erhalten, daß man bezogen auf das Gesamtgewicht der Komponenten A, B und C

A) 30 bis 90 Gew.-% einer Verbindung, die in einer ihrer tautomeren Strukturen der Formel

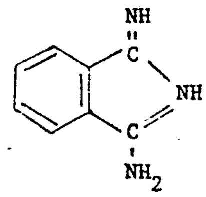

entspricht, mit

B) 6 bis 35 Gew.-% Phenylguanazol und

C) 3-35 Gew.-% einer CH-aciden Verbindung, einer aktivierten Halogenverbindung oder eines Polyamins umsetzt.

10. Verfahren zur Erzeugung von Färbungen auf Fasermaterialien, dadurch gekennzeichnet, daß man die Komponenten A, B, C und D gemäß den Ansprüchen 1 bis 9 gegebenenfalls in Gegenwart eines Verdünnungsmittels unter Wärmebehandlung auf Fasermaterialien kondensiert.

## Claims

1. Dyestuffs which are obtained by subjecting a mixture of

A) a compound, one of the tautomeric structures of which corresponds to the formula

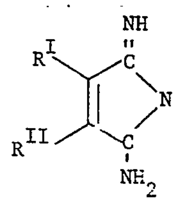

(I)

in which

$R^I$ and $R^{II}$ denote alkyl, phenyl or hydrogen, or together denote a radical of the formula

$S-CH_2-CH_2-S$, 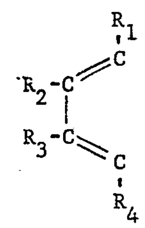 or $CH_2-CH_2-CH_2-CH_2$

wherein

$R_1$, $R_2$, $R_3$ and $R_4$ designate phenyl, alkoxy, halogen, phenoxy, alkyl or hydrogen ;

B) a compound of the formula

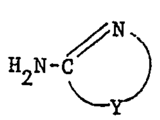

(II)

in which

Y represents the remaining atoms which are necessary to form an optionally substituted heterocyclic 5-membered or 6-membered ring which, in addition to the N atom, can contain 1 to 3 further heteroatoms, such as N, S or O, and to which further optionally substituted carbocyclic or optionally substituted heterocyclic rings can be attached ;

C) a polyamine and/or a CH-acid compound and/or an activated halogen compound ; and

D) a metal or a metal compound which can be used for the preparation of metal-containing phthalocyanines, to a condensation reaction, if appropriate in the presence of a diluent, under the influence of heat.

2. Dyestuffs according to claim 1, which are obtained by using 30-90 % by weight, in particular 50-70 % by weight, of component A, 1-35 % by weight, in particular 1-20 % by weight, of component B and 1-35 % by weight, in particular 1-20 % by weight, of component C, in each case relative to the total weight of

components A, B and C.

3. Dyestuffs according to claim 1, which are obtained by using a compound of the formula (1) in which

$R^I$ and $R^{II}$ are $C_1$-$C_4$-alkyl, phenyl or hydrogen, or together are radicals of the formulae $S—CH_2—CH_2—S$, $CH_2—CH_2—CH_2—CH_2$ or

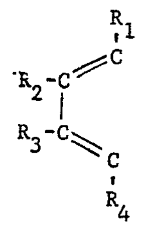

wherein

$R_1$, $R_2$, $R_3$ and $R_4$ designate hydrogen or halogen atoms, in particular chlorine or bromine, or one or two of the radicals $R_1$, $R_2$, $R_3$ and $R_4$ designate alkyl groups, in particular $C_1$-$C_4$-alkyl, alkoxy groups, preferably methoxy, or phenoxy groups and the remaining radicals designate hydrogen atoms, as component A.

4. Dyestuffs according to Claim 3, which are obtained by using 1-amino-3-imino-isoindolenine as component A.

5. Dyestuffs according to Claims 1 to 4, which are obtained by using a compound of the formula

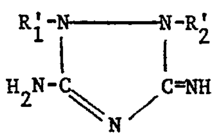

in which

$R_1'$ and $R_2'$ represent hydrogen or acyl, alkyl or aryl radicals, as component B.

6. Dyestuffs according to Claim 5, which are obtained by using 2,5-diamino-3-phenyl-1,3,4-triazole as component B.

7. Dyestuffs according to Claims 1 to 6, which are 15 obtained by using a polyamine of the formula

$$[Ar]—(NH_2)_n$$

in which

Ar represents an optionally substituted phenyl, biphenylyl, naphthyl, binaphthylyl or anthraquinonyl radical and

n designates 2, 3 or 4, as component C.

8. Dyestuffs according to Claims 1 to 7, which are obtained by using a CH-acid compound of the formula

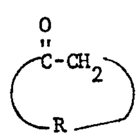

in which

R represents the atoms which are required to form an optionally substituted carbocyclic or heterocyclic 5-membered or 6-membered ring, and/or an open-chain 3-dicarbonyl compound of the formula

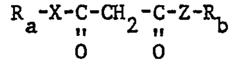

in which

$R_a$ and $R_b$ represent optionally substituted alkyl or aryl and

X and Z designate a bridge member —O— or —NH— or a direct bond, as component C.

9. Dyestuffs according to Claim 1, which are obtained by reacting

A) 30 to 90 % by weight of a compound, one of the tautomeric structures of which corresponds to the formula

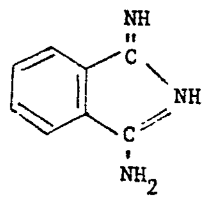

with

B) 5 to 35 % by weight of phenylguanazole and

C) 3-35 % by weight of a CH-acid compound, the percentages by weight being in each case relative to the total weight of components A, B and C.

10. Process for producing dyeings on fibre materials, characterised in that components A, B, C and D according to Claims 1 to 9 are subjected to a condensation reaction on fibre materials, if appropriate in the presence of a diluent, under the influence of heat.

**Revendications**

1. Colorants obtenus en condensant un mélange de

A) un composé qui, dans l'une de ses structures tautomères, répond à la formule

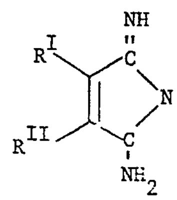

(I)

dans laquelle

$R^I$ et $R^{II}$ représentent des groupes alkyle, phényle, l'hydrogène ou forment ensemble les restes de formule

$S-CH_2-CH_2-S$, 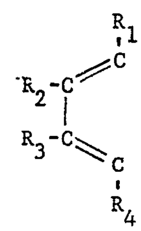 ou $CH_2-CH_2-CH_2-CH_2$

dans lesquels

$R_1$, $R_2$, $R_3$ et $R_4$ représentent des groupes phényle, alcoxy, des halogènes, des groupes phénoxy, alkyle ou l'hydrogène,

B) un composé de formule

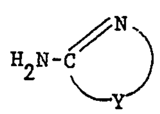

(II)

dans laquelle

Y représente les atomes résiduels nécessaires pour former un hétérocycle à 5 ou 6 chaînons éventuellement substitué qui, en plus de l'atome d'azote, peut contenir 1 à 3 autres hétéroatomes tels que N, S ou O, et sur lequel d'autres noyaux carbocycliques éventuellement substitués ou hétérocycliques éventuellement substitués peuvent être condensés,

C) une polyamine et/ou un composé à CH acide et/ou un composé halogéné activé, et

D) un métal ou un composé métallique pouvant être utilisé pour la préparation de phtalocyanines métalliques ;

éventuellement en présence d'un diluant, en traitant à la chaleur.

2. Colorants selon la revendication 1, caractérisés en ce que, par rapport au poids total des composants A, B et C, on utilise de 30 à 90 % en poids, plus spécialement de 50 à 70 % en poids du composant A, de 1 à 35 % en poids, plus spécialement de 1 à 20 % en poids, du composant B et de 1 à 35 % en poids, plus spécialement de 1 à 20 % en poids du composant C.

3. Colorants selon la revendication 1, obtenus en utilisant en tant que composant A un composé de formule I
dans laquelle
$R^I$ et $R^{II}$ représentent des groupes alkyle en $C_1$-$C_4$, phényle, l'hydrogène ou forment ensemble des restes de formule $S—CH_2—CH_2—S$, $CH_2—CH_2—CH_2—CH_2$ ou

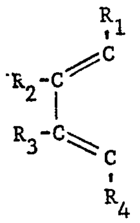

dans laquelle
$R_1$, $R_2$, $R_3$ et $R_4$ représentant des atomes d'hydrogène ou d'halogènes, plus particulièrement de chlore ou de brome, ou bien un ou deux des symboles $R_1$, $R_2$, $R_3$ et $R_3$ représentent des groupes alkyle, plus particulièrement alkyle en $C_1$-$C_4$, alcoxy, de préférence méthoxy, ou des groupes phénoxy et les autres des atomes d'hydrogène.

4. Colorants selon la revendication 3, obtenus en utilisant en tant que composant A la 1-amino-3-imino-isoindolénine.

5. Colorants selon les revendications 1 à 4, obtenus en utilisant en tant que composant B un composé de formule

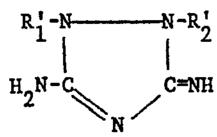

dans laquelle
$R_1'$ et $R_2'$ représentent l'hydrogène, des groupes acyle, alkyle ou aryle.

6. Colorants selon la revendication 5, obtenus en utilisant en tant que composant B le 2,5-diamino-3-phényl-1,3,4-triazole.

7. Colorants selon les revendications 1 à 6, obtenus en utilisant en tant que composant C une polyamine de formule

$$[Ar]—(NH_2)_n$$

dans laquelle
Ar représente un reste phényle, biphénylyle, naphtyle, binaphtylyle ou anthraquinonyle éventuellement substitué et
n est égal à 2, 3 ou 4.

8. Colorants selon les revendications 1 à 7, obtenus en utilisant en tant que composant C un composé à CH acide de formule

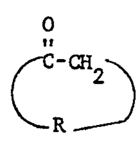

dans laquelle
R représente les atomes nécessaires pour former un noyau carbocyclique ou hétérocyclique à 5 ou 6 chaînons éventuellement substitué, et/ou un composé 3-dicarbonylé acyclique de formule

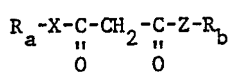

dans laquelle
$R_a$ et $R_b$ représentent des groupes alkyle ou aryle éventuellement substitués et
X et Z représentent des ponts —O— ou —NH— ou des liaisons directes.

9. Colorants selon la revendication 1, obtenus en faisant réagir par rapport au poids total des

composants A, B et C

A) 30 à 90 % en poids d'un composé qui, dans l'une de ses formes tautomères, répond à la formule

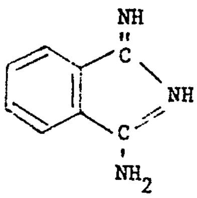

avec

B) 5 à 35 % en poids de phénylguanazole et

C) 3 à 35 % en poids d'un composé à CH acide, d'un composé halogéné activé ou d'une polyamine.

10. Procédé pour réaliser des teintures sur des matières fibreuses, caractérisé en ce que l'on condense les composants A, B, C et D des revendications 1 à 9, éventuellement en présence d'un diluant et en traitant à la chaleur, sur les matières fibreuses.